Europäisches Patentamt

European Patent Office

Office européen des brevets

(11) Publication number: **0 147 817**
**B1**

(12) **EUROPEAN PATENT SPECIFICATION**

(45) Date of publication of patent specification: **10.08.88**

(51) Int. Cl.⁴: **G 03 G 15/00**

(21) Application number: **84116040.1**

(22) Date of filing: **21.12.84**

(54) Apparatus for producing duplex copies from simplex originals.

(30) Priority: **27.12.83 US 565933**
**12.12.84 US 680707**

(43) Date of publication of application:
**10.07.85 Bulletin 85/28**

(45) Publication of the grant of the patent:
**10.08.88 Bulletin 88/32**

(84) Designated Contracting States:
**DE FR GB NL**

(56) References cited:
**US-A-4 158 500**
**US-A-4 248 528**

**RESEARCH DISCLOSURE, no. 242, June 1984,**
**pages 260-264, Havant, Hampshire, GB;**
**"Simplex to duplex copier apparatus"**

(73) Proprietor: **EASTMAN KODAK COMPANY**
**343 State Street**
**Rochester New York 14650 (US)**

(72) Inventor: **Bray, Richard L.**
**765 Hosmer Road**
**Churchville New York 14428 (US)**

(74) Representative: **Blickle, K. Werner, Dipl.-Ing.**
**et al**
**KODAK AKTIENGESELLSCHAFT Postfach 369**
**D-7000 Stuttgart-Wangen 60 (DE)**

Courier Press, Leamington Spa, England.

## Description

This invention relates to apparatus for copying a set of simplex originals to produce a set of duplex copies. More particularly, this invention relates to electrophotographic apparatus for copying a set of simplex originals to produce a set of duplex copies having subsets in which certain pages have selected characteristics. This invention further relates to a method for producing successive subsets of copies from a set of simplex originals.

In the copier field, the trend has been to higher and higher copying speeds with as little operator intervention as possible in order to maintain a high copy rate output. Thus, the manual placement of originals on the exposure platen of a copier to produce copies of each original has been replaced in higher speed copiers with automatic feeders which automatically feed originals to the exposure platen of the copier. Whether the original is placed on the platen manually, or by means of an automatic feeder, copiers are capable of producing simplex copies from simplex originals, simplex copies from duplex originals, duplex copies from simplex originals, and duplex copies from duplex originals. For example, in US—A—4,158,500, there is disclosed apparatus for producing duplex or simplex collated copies from duplex and simplex originals. The copier includes a recirculating feeder for sequentially feeding simplex or duplex originals to an exposure platen of the copier for producing images on copy sheets in either a simplex or duplex mode. US—A—4,191,465, discloses apparatus operable in duplex and simplex modes for making copies having images on one or both sides thereof in a single pass of a copy sheet through the copier. The apparatus may include a recirculating feeder which positions either simplex or duplex originals at the exposure platen of the copier.

It has been recognized that it would be desirable to process certain selected originals, in a set of originals, differently from the other originals in the set. In US—A—4,248,528, there is disclosed a copier in which operator-marked control sheets are fed past an optical scanner to program the copier to process the selected documents in a particular manner. This apparatus is disadvantageous in that the special scanning equipment and control sheets add expense and complexity to the copier. In US—A—4,310,235, a reproduction machine includes a card reader for reading marked cards which contain job stream information such as the selection of simplex copying within a duplex job and vice versa. The card reader is also a complex and expensive means for controlling a copier. Thus, the devices in US—A—4,248,528, and in US—A—4,310,235, are not a satisfactory solution to the problem of controlling a copier to proces selected originals differently from others in a set of originals. Further, these patent disclosures do not disclose the desirability of automatically producing a duplex copy set from a simplex original set in which the copy set is separated in subsets with the first page of each subset on a front page.

It is an object of the present invention to overcome the above described problems of prior art devices and to provide an apparatus in which a simplex set of originals can be copied as duplex copies which are segmented into subsets or chapters with the first page of each subset being copied on the front page of a duplex copy.

In accordance with the present invention there is provided apparatus for copying a set of simplex originals to produce a set of duplex copies having subsets in which the first page of each subset is on the front side of a copy sheet, said apparatus comprising circulating means for receiving a set of simplex originals at a receiving position and for sequentially recirculating individual originals from said receiving position to an exposure position and then back to said receiving position, producing means for producing images of originals in said exposure position, supply means for supplying copy sheets to receive images for said producing means, operator actuable means for selecting a mode of operation for said apparatus characterized in that control means are provided for (1) controlling said apparatus in a set-up mode in which said operator actuatable means can be actuated to designate individual simplex originals to be copied as the respective first pages of subsets, and (2) controlling in a producing mode (a) said circulating means to circulate said simplex originals to said exposure position, (b) said producing means to produce sequential images of said originals, and (c) said supply means to supply copy sheets to said producing means to receive images of said simplex originals on the front and back sides of said copy sheets with the designated first pages of each subset being received on the front side of a copy sheet.

It is a further object of the present invention to provide a method for producing successive subsets of copies from a set of simplex originals, said method being performed in apparatus having control means for receiving inputs designating subsets and means for selectively producing simplex or duplex copies.

In accordance with the present invention such method is characterized by the steps of the operator designating on said control means certain originals as first pages in a subset, counting the number of copies in a subset, producing all copies except the last copy in each subset as duplex copies, and producing the last copy in a subset as a simplex copy when the number of copies in the subset is odd and as a back page of a duplex copy when the number of copies in the subset is even.

The disclosed invention provides an efficient and relatively inexpensive means for producing duplex copies from a set of originals in which the copies are divided into subsets, or chapters, with the first page of each subset appearing on the front page of a duplex copy. Such subsets are produced in the normal operation of the copier, once the operator has designated the originals which are to appear as first pages. The first pages can be produced on copy sheets having special characteristics, if desired.

Embodiments of the present invention will now be described, by way of example, with reference to the accompanying drawings in which:

Fig. 1 is a schematic diagram of copier apparatus according to the present invention;

Fig. 2 is a block diagram of the logic and control unit and operator control panel of the apparatus of Fig. 1;

Fig. 3 is a flow chart of the set-up mode of operation of the apparatus of Fig. 1;

Fig. 4 is a flow chart of the producing mode of operation for side 1; and

Fig. 5 is a flow chart of the producing mode of operation for side 2.

To assist in understanding the present invention, it will be useful to consider an electrophotographic copier having a logic and control unit, an operator panel, and a circulating original feeder. It will be noted that although the invention is suitable for use with a circulating feeder it may also be used with other types of feeders.

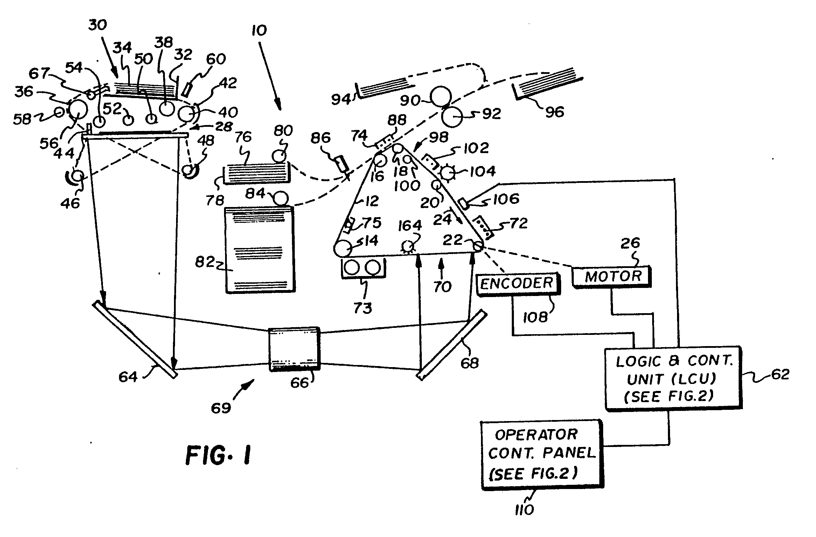

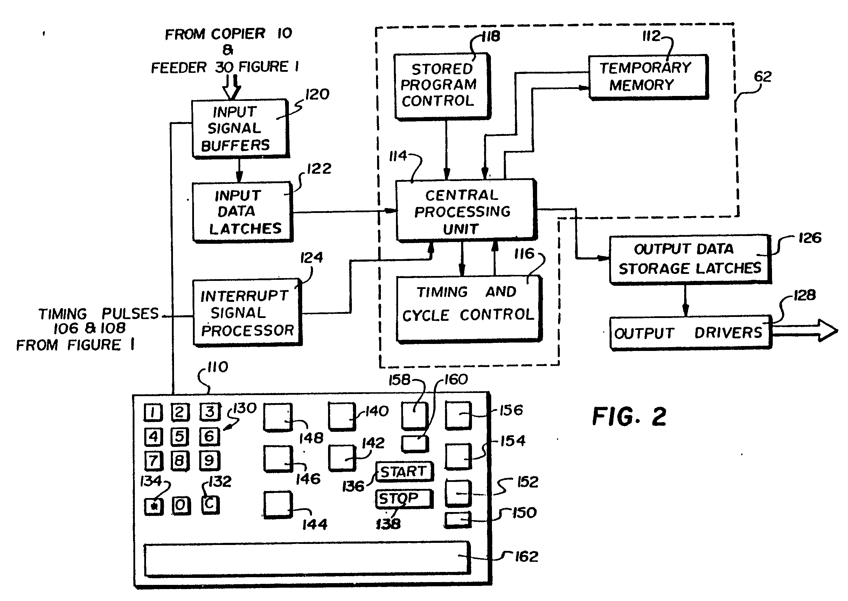

Referring now to Fig. 1, there is shown an electrographic copier 10 having a photoconductive belt 12 trained about rollers 14, 16, 18, 20 and 22. Belt 12 is moved in a clockwise direction as represented by arrow 24 by means of motor 26 mechanically linked to roller 22. Copier 10 includes an exposure position comprising exposure platen 28.

Located on top of exposure platen 28 is a circulating feeder 30 having a receiving position such as tray 32 for receiving a set of originals 34. In general, circulating feeder 30 sequentially circulates originals 34 along path 36 from the bottom of tray 32 to exposure platen 28 and then back up to the top of the set of originals in tray 32. This is effected by means of feed roller 38 which feeds the bottom-most original tray 32 between guide roller 40 and guide 42 onto platen 28 where the original is stopped by gate 44.

After exposure by flash lam ps 46 and 48, gate 44 is moved out of path 36 and roller 50, 52, 54, 56 and 58 move original 34 back to the top of the set of originals in tray 32. As will be described in greater detail later as an original 34 moves along path 36 away from tray 32, a detector 60 generates a count signal which is supplied to logic and control unit 62. A set count finger 67 is also provided for resting on the top of a set and for indicating when a set of originals has been circulated by feeder 30.

With reference to Fig. 1, there is shown a producing means 69 which is adapted to produce a transferable image of an original 34 on exposure platen 28. When an original has been illuminated by flash lamps 46 and 48, an image is produced which is projected by mirror 64, lens 66, and mirror 68 onto belt 12 at exposure station 70. In advance of exposure station 70 is a charging station comprising corona charger 72 which sensitizes belt 12 by applying an electrostatic charge thereon (for example, a negative electrostatic charge). At exposure station 70, the projected light image dissipates the electrostatic charge at the exposed areas of the photoconductor to form a latent electrostatic image corresponding to the image of the original.

The latent electrostatic image is developed at magnetic brush developing station 73 which applies a developer including iron carrier particles and electroscopic toner particles with an electrostatic charge (e.g., a positive charge) opposite to that of the latent electrostatic image.

The toner image is subjected to radiation by post-development erase lamp 75 to reduce the electrical stress on photoconductive belt 12 and to reduce the attraction between the toner image and belt 12.

As the toner image approaches transfer corona charger 74, a copy sheet 76 is fed from either supply 78 by feed roller 80 or from supply 82 by feed roller 84 to registration mechanism 86. At a proper time registration mechanism 86 releases sheet 76 which is moved into registration with the toner image on belt 12 in advance of corona charger 74. Charger 74 transfers the toner image to copy sheet 76 by applying a charge (e.g., a negative charge) opposite in polarity to that of the toner image. Detack charger 88 neutralizes the charge on sheet 76 so that it separates at roller 18. Sheet 76 is passed through heated fuser rollers 90 and 92 to permanently fuse the toner image to sheet 76. The copy sheet is then transported to an upper output tray 94 or to a side output tray 96.

Cleaning station 98 is provided to effect mechanical and electrical cleaning of photoconductive belt 12. Station 98 includes: a cleaning assist erase lamp 100 which exposes photoconductive belt 12 to radiation to substantially reduce any charge remaining on belt 12; a cleaning assist charger 102 which impresses an alternating current charge on belt 12 to neutralize the charges on untransferred toner particles; and a brush 104 to remove any residual toner from belt 12 so that it is ready for another electrophotographic cycle.

To coordinate operation of the various instrumentalities of copier 10, including feeder 30, with movement of image areas of belt 12, belt 12 has a plurality of perforations along one of its edges. These perforations generally are spaced equidistantly along the edge of belt 12. For example, belt 12 may be divided into six image areas by F perforations and each image area may be subdivided into 51 sections by C perforations. The relationship of the F and C perforations to the image areas is disclosed in detail in US—A—3,914,047. At a fixed location along the path of movement of belt 12, there is provided a detector 106 for detecting belt perforations and for providing timing pulses to logic and control unit 62. An encoder 108 is linked to roller 22 and provides a series of timing pulses to logic and control unit 62 which are used in conjunction with the pulses from detector 106 to control the operation of copier 10.

Referring now to Fig. 2, there is shown in greater detail an illustrative logic and control unit (LCU) 62 to which is connected operator control panel 110. LCU 62 has a programmable computer such as a microprocessor which has a stored program responsive to input signals for sequentially actuating the various instrumentalities of copier 10 and feeder 30. LCU 62 also controls the operation of many other functions of copier 10 as is disclosed in greater detail in US—A—3,914,047. Programming of a number of commercially available microprocessors, such as Intel Model 8085 (which along with others can be used in accordance with the invention), is a conventional skill well understood in the art. The following disclosure is written to enable a programmer having ordinary skill in the art to produce an appropriate control program for the microprocessor. The particular details of any such program would of course depend on the architecture of the designated microprocessor.

In Fig. 2, a block diagram of logic and control unit 62 is shown which interfaces with copier 10 and feeder 30. A more detailed disclosure of the operation and structure of feeder 30 is disclosed in US—A—4,099,860. LCU 62 includes temporary data storage memory 112, central processing unit 114, timing and cycle control unit 116, and stored program control unit 118 which comprises a read-only memory (ROM). Data input and output is performed sequentially under program control. Input data is applied to LCU 62 either through input signal buffers 120 to input data latches 122 or to interrupt signal processor 124. The input signals are derived from various switches such as provided on operator control panel 110, from timing pulses such as from detector I06 and encoder I08 and from various analog to digital converters. The output data and control signals are applied to output data storage latches 126 which provide inputs to suitable output drivers 128 which are connected to various copier and feeder instrumentalities.

Operator control panel 110 includes a plurality of operator actuatable switches (buttons) only some of which are shown. For example, numerical keyboard 130 includes ten buttons for each of the numbers "0"-"9" inclusive. A "C" button 132 is used to cancel or clear the previous instructions fed in from panel 110 and star "★" button 134 which is actuated by the operator to designate simplex originals as first pages of copy sheets which are to be copied on the front side of copy sheets. A start button 136 initiates operation of copier 10 and stop button 138 terminates operation of copier 10. Copier 10 and feeder 30 may be operated in either a non-collate or collate mode. If the non-collate mode is desired, then button 140 is depressed and if the collate mode is desired, button 142 is depressed. In the non-collate mode, a set of originals placed in tray 32 of feeder 30 would be fed individually to copier platen 28 where the copier would make the number of copies requested by the operator for each original placed on platen 28 before making copies of the next original. On the other hand, in the collate mode, each original in a set is copied once to produce a collated copy set. The set of originals is then repeatedly recirculated until the number of copies requested is completed. Thus, in the non-collate mode, the output of the copier are sets of uncollated copies which must either be manually collated or collated in a sorter. On the other hand, when operating in the collate mode, a set of copies is produced which is already collated.

The originals which are fed to exposure platen 28 may either have images on both sides (duplex) or may have images only on one side (simplex). Similarly, the copies which are produced by copier 10 may be images on either one or two sides of the copy. Thus, if duplex output is not desired, then "No" button 144 would be actuated. If duplex output is desired, then the operator would either depress button 146 if one sided originals were placed in feeder 30 or button 148 if two sided originals were recirculated by feeder 130. Copier 10 may also be operated in a cover insertion mode in which special copy sheets may be provided from a supply to either the front or back of a copy set. If covers are not requested, then the operator would depress "No" button 150. Buttons 152, 154, and 156 respectively indicate to the copier whether covers are requested on the front, back or both front and back of a copy set. Buttons 158 and 160 are provided for feeding copies to side output tray 96 or to top output tray 94, respectively.

Other buttons not shown may also be provided on operator control panel 110 to regulate the exposure of a copy to select reduction or enlargement of an original, etc. Control panel 110 also includes a display 162 upon which messages are shown to indicate to the operator what mode the copier is operating in, what action should be taken next, where jams may be located in the copier, etc.

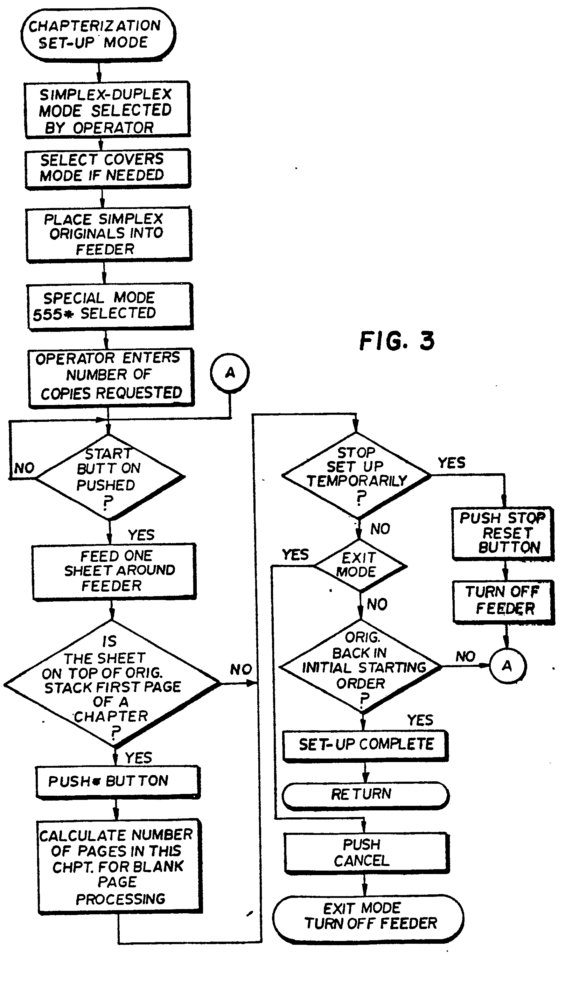

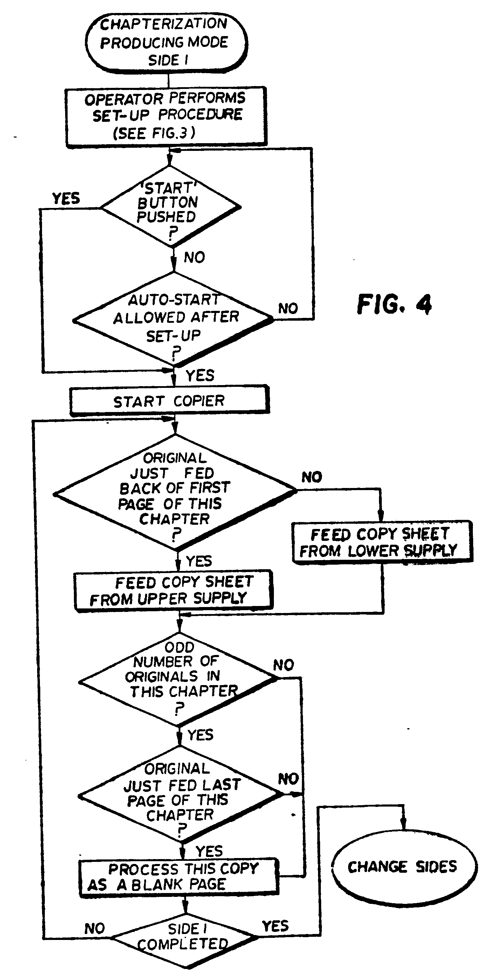

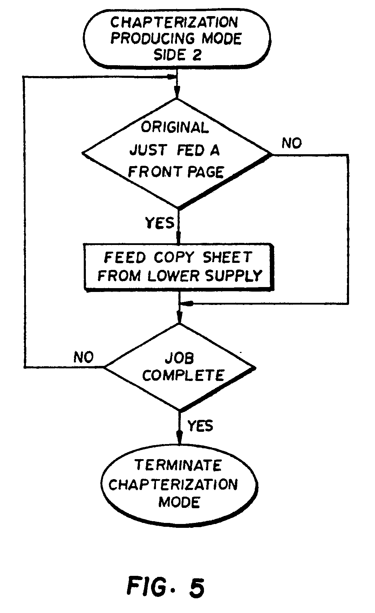

In Fig. 3, there is shown a flow chart of the setup mode of operation of the apparatus of Fig. I; flow charts of the producing mode are shown in Fig. 4 and 5. For the purposes of this application, when the copier is in a mode wherein the first pages of duplex copy subsets or chapters are copied on the front of a copy sheet, it will be referred to as the chapterization mode. The chapterization mode includes a setup mode and a producing mode. In the setup mode, an operator actuates several buttons on panel 110. Thus, since a set of simplex originals are to be copied to produce a duplex copy set, button 146 indicating one sided originals with two-sided copy is actuated. Button 142 is actuated to indicate that feeder 30 is to operate in a collate mode. The side tray button 158 is actuated for a reason to be described in greater detail later. The operator also selects the appropriate button relating to covers. The operator then places a set of simplex originals into tray 32 of feeder 30. The originals are in page sequential order with the highest numbered original on the bottom of the set.

The operator now indicates to LCU 62 that copier 10 is to be operated in the special chapterization mode by depressing the "5" button on numerical keyboard 130 three times and then depressing "★" button 134 (555★). Display 162 will now show the message "copier is now in chapterization mode." The last instruction to be entered on operator control panel 110 is the number of copies requested of each set which is entered on numerical keyboard 130.

Feeder 30 is now under the manual control of the operator and originals 34 are sequentially recirculated to the top of the set by repeatedly actuating start button 136. As an original 34 passes detector 60, a count signal is generated and stored in temporary memory 112. If the original which has circulated to the top of the set is not one that is the first page of a chapter and if a decision has not been made to temporarily stop or to exit the setup mode and if the originals are not back in their initial starting order, then the routine will be returned via "A" to circulate another original.

If the original on top of the original stack is the first page of a chapter or copy subset, then the operator presses "★" button 134 to store in memory 112 the number of the original which is to be so processed. Since logic and control unit 62 has been counting the number of originals which have been circulated from the bottom of the set placed in tray 32, it calculates the number of originals in each chapter. If the number of original sheets in a chapter is even then nothing will be done. If the number of original sheets in a chapter is odd, then the back page of the last duplex copy sheet in the chapter is processed as a blank page. This can be effected by means of an erase lamp 164 which extends the width of belt 12 and is located between exposure station 70 and development station 73.

If it is desired to stop the setup mode temporarily, stop button 138 is actuated to turn off the feeder for a short period of time. The routine would then return to "A" by pushing start button 136 to circulate another original. If, on the other hand, it is desired to exit or cancel the chapterization setup mode procedure, then cancel button 132 is actuated by the operator to turn feeder 30 off and to return copier 10 to its normal operating mode.

When the last original to be circulated is back in the initial starting order, the setup mode is completed and the copier is ready to start the producing mode (Fig. 3). This may be effected by pushing start button 136. The copier may be programmed, however, to start automatically after setup and after a predetermined delay period. In either event, the copier is started to produce duplex copies from the simplex originals in feeder 30.

At this point, it is useful to describe the operation of copier 10 in the simplex to duplex mode without chapterization. A job will be assumed in which no covers are requested and a set of eight simplex originals are placed in feeder tray 32. The operator actuates the "start" button 136 to circulate the originals to determine whether the number of originals is odd or even. In the example, the number of originals is even. Thus, as feeder 30 circulates the originals to exposure platen 28 only even numbered originals are exposed as the back sides of the duplex copies to be produced. Odd numbered originals are not exposed. Copy sheets will be fed from lower supply 82 to receive the even numbered images and after fusing will be fed into side output tray 96 with the back sides facing down. After feeder 30 has circulated all of the originals back to the top of tray 32, the operation of copier 10 is stopped. The operator removes the copies from tray 96, inverts them, and places them in lower supply 82 with the back sides facing up and in reverse page order (e.g., page 8, page 6, etc.).

The operator now presses "start" button 136 and feeder 30 circulates the originals from tray 32 a second time. During this circulation, however, only the odd numbered originals are exposed. Thus, the first original containing page 8 would be circulated without exposing whereas the next original containing page 7 would be exposed. The copy sheet having a copy of page 8 on its back side is fed out of tray 78 by feed roller 80 to receive from belt 12 the image of original 7 on its front side. The duplex copy is fed to output tray 94 with the odd page (front side) facing up. The originals with odd pages 5, 3, and 1 are similarly circulated and reproduced on the front sides of the copy sheets with pages 6, 4, and 2 on their back sides until a completed duplex set is fed into tray 94.

If the number of simplex originals is odd, e.g. seven as determined by a precirculation count of originals in the feeder, then prior to the first exposing circulation of originals, a copy sheet is fed out from supply 82 and deposited in tray 96 with a blank image on the back side of the copy sheet. Original "7" is then circulated without being exposed and the first original to be exposed is original "6" which is copied on a second sheet fed from supply 82. The originals are circulated until all of the even numbered originals are copied. The operator now removes the simplex copies from tray 96, inverts them, and places them in lower supply 82 with the blank sheet facing up. During the second circulation of the originals, when the original corresponding to page "7" is fed to platen 28, it will be exposed and received by the first copy sheet. The odd originals will then be sequentially exposed and a completed duplex copy delivered to tray 94 in page sequential order.

It will now be convenient to resume a description of the operation of copier 10 in the chapterization mode. With particular reference to Fig. 4, after copier 10 is started in the production mode, feeder 30 will sequentially circulate originals twice to exposure platen 28, first exposing the originals which form the back pages and then exposing the originals which form the front pages. In order to more clearly illustrate this mode of operation, it is assumed that nine simplex originals are placed in tray 32 and that pages 1, 4, and 7 have been designated by the operator to be first pages of chapters 1, 2, and 3. Thus, the desired copy sheet duplex set would have the following makeup: originals 1 and 2 are copied on the front and back sides of the first copy sheet; original 3 is copied on the front side of the second copy sheet with the back side blank; original 4 which is the first page of a chapter, is copied on the front side of the third copy sheet; and original 5 on the back side thereof. Original 6 is copied on the front side of the fourth copy sheet and the back side is blank; Original 7 is copied on the front side of the fifth copy sheet since it is the first page of a chapter and original 8 is copied on the back side thereof; and original 9 is imaged on the front side of the sixth copy sheet with the back side blank.

After copier 10 has gone through the set-up mode, logic and control unit 62 has stored therein the identity of all originals which will appear as back sides. Thus, if the original just fed is a back side, the proper kind of paper is determined as shown in Fig. 4. Logic and control unit 62 determines whether the original just fed is the back of the first page of a chapter. If it is not, then a copy sheet is fed from lower supply 82 which contains normal copy sheets such as white sheets. If, however, the original just fed is the back of the first page of a chapter, then a copy sheet is fed from upper supply 78 which may, for example, include copy sheets of the same or of a different color such as yellow. If the first page of a chapter is the same color as the other pages, it could also be fed from lower supply 82. LCU 62 then determines whether there are an odd number of originals in the chapter. If there are, the determination is made whether the original just fed is the last page of the chapter. If it is, then this page is processed as a blank page on a copy sheet from lower supply 82. If the number of originals in the chapter is even, then the routine is returned to determining whether the original just fed is the back of the first page of the chapter. Similarly, if the originals in a chapter is odd, and the original just flashed is not the back of the last page of the chapter, then the routine will be returned if side 1 (back pages) is not completed.

After side 1 is completed, using the example given above of nine simplex originals with pages 1, 4 and 7 as first pages of chapters, tray 96 would contain a stack having a copy of original 2, a blank sheet, copy of original 5, blank sheet, copy of original 8, and another blank sheet. As noted on page 12, the operator removes the stack of sheets from tray 96, inverts them, and places them in lower supply 82 in preparation for the copying of side 2. Side 2 (front pages) is placed on the copy sheets, as shown, in the flow chart in Fig. 5. In the example given, originals 1, 3, 4, 6, 7 and 9, appear as front pages. When all of the front pages have been copied, the chapterization mode is terminated.

It will be understood that the first page of a chapter may be on sheets of different weight than the other pages; may be on tabbed sheets; etc.

**Claims**

1. Apparatus for copying a set of simplex originals to produce a set of duplex copies having subsets in which the first page of each subset is on the front side of a copy sheet (76), said apparatus comprising circulating means (30) for receiving a set of simplex originals (34) at a receiving position and for sequentially recirculating individual originals (34) from said receiving position to an exposure position (28) and then back to said receiving position producing means (69) for producing images of originals in said exposure position, supply means (78, 80, 82, 84) for supplying copy sheets (76) to receive images from said producing means, operator actuatable means (110) for selecting a mode of operation for said apparatus characterized in that control means (110, 62) are provided for (1) controlling said apparatus in a set-up mode, in which said operator actuatable means (110) can be actuated to designate individual simplex originals to be copied as the respective first pages of subsets, and (2) controlling in a producing mode (a) said circulating means (30) to circulate said simplex originals (34) to said exposure position (28), (b) said producing means (69) to produce sequential images of said originals (34), and (c) said supply means (78, 80, 82, 84) to supply copy sheets to said producing means (69) to receive images of said simplex originals (34) on the front and back sides of said copy sheets (76) with the designated first pages of each subset being received on the front side of a copy sheet (76).

2. Apparatus according to Claim 1, characterized in that said control means (110, 62) is operable in said set-up mode to circulate originals one at a time under operator control and to count the number of simplex originals (34) to be copied in each subset to determine if such number is odd or even, and said control means (110, 62) is operable in said producing mode to process the back side of the last copy sheet in a subset as a blank page if the number of simplex originals to be copied in a subset is odd.

3. Apparatus according to Claim 1, characterized in that said control means (110, 62) is operable in the producing mode to actuate said producing means (69) such that images of originals forming back sides of a copy sheet (76) are produced in a first sequence and images of originals forming front sides are produced in a second sequence.

4. Apparatus according to any of Claims 1 to 3, characterized in that said supply means includes a first supply (78, 80) of copy sheets (76) and a second supply (82, 84) of copy sheets (76) and wherein said control means (110, 62) in said producing mode causes said first supply (78, 80) to supply a copy sheet (76) which is to receive from said producing means (70) on the front side thereof an image corresponding to an original (34) which is designated as a first page of a subset, and causes said second supply (82, 84) to supply a copy sheet which is to receive from said producing means (69) on the front side thereof an image corresponding to a nondesignated original (34).

5. Apparatus according to Claim 4, characterized in that said first supply (78, 80) and second supply (82, 84) respectively have copy sheets of first and second characteristics so that the first copy sheet of a subset is of said first characteristic and the other copy sheets of said subset are of said second characteristic.

6. A method for producing successive subsets of copies from a set of simplex originals, said method being performed in apparatus having control means for receiving inputs designating subsets and means for selectively producing simplex or duplex copies, said method is characterized by the steps of:

the operator designating on said control means certain originals as first pages in a subset;

counting the number of copies in a subset;

producing all copies except the last copy in each subset as duplex copies; and

producing the last copy in a subset as a simplex copy when the number of copies in the subset is odd and as a back page of a duplex copy when the number of copies in the subset is even.

## Patentansprüche

1. Vorrichtung zum Kopieren eines Satzes von einseitigen Vorlagen zur Herstellung eines Satzes von doppelseitigen Kopien mit Untergruppen, bei denen sich jeweils die erste Seite auf der Vorderseite eines Kopieblattes (76) befindet, wobei die Vorrichtung eine umlaufende Fördereinrichtung (30) aufweist, die einen Satz von einseitigen Vorlagen (34) in einer Aufnahmeeinrichtung aufnimmt und einzelne Vorlagen (34) nacheinander von der Aufnahmeeinrichtung aus zu einer Belichtungsstation (28) und wieder zurück zu der Aufnahmeeinrichtung fördert, Bilderzeugungsmittel (69) zum Abbilden der Vorlagen in der Belichtungsstation, Zuführmittel (78, 80, 82, 84) zum Zuführen von Kopieblättern (76), auf welche die von den Bilderzeugungsmitteln erzeugten Bilder kopiert werden, sowie eine von einer Bedienungsperson betätigbare Einrichtung (110) zum Wählen einer Betriebsart für die Vorrichtung, dadurch gekennzeichnet, daß eine Steuereinrichtung (110, 62) vorgesehen ist, mit der (1) die Vorrichtung in einer Anfangsbetriebsart derart gesteuert wird, daß durch das Betätigen der Mittel (110) durch die Bedienungsperson bestimmte zu kopierende einseitige Vorlagen als erste Seiten von Untergruppen gekennzeichnet werden, und (2) in einer Produktionsbetriebsart derart, daß (a) die Fördereinrichtung (30) die einseitigen Vorlagen (34) zu der Belichtungsstation (28) fördert, (b) die Bilderzeugungsmittel (69) nacheinander Bilder der Vorlagen (34) erzeugen und (c) die Zuführmittel (78, 80, 82, 84) den Bilderzeugungsmitteln (69) Kopieblätter zuführen, damit auf die Vorder- und Rückseite dieser Kopieblätter (76) Bilder der einseitigen Vorlagen (34) kopiert werden, wobei die gekennzeichnete erste Seite einer jeden Untergruppe jeweils auf die Vorderseite eines Kopieblattes (76) kopiert wird.

2. Vorrichtung nach Anspruch 1, dadurch gekennzeichnet, daß die Steuereinrichtung (110, 62) in der Anfangsbetriebsart so betätigbar ist, daß sie, gesteuert von der Bedienungsperson, jeweils eine Vorlage umlaufen läßt und die in jeder Untergruppe zu kopierenden einseitigen Vorlagen (34) zählt und feststellt, ob es sich um eine ungerade oder gerade Anzahl handelt, und daß die Steuereinrichtung (110, 62) in der Produktionsbetriebsart so betätigbar ist, daß sie die Rückseite des letzten Kopieblattes einer Untergruppe als leere Seite liefert, wenn die Zahl der zu kopierenden einseitigen Vorlagen in einer Untergruppe ungerade ist.

3. Vorrichtung nach Anspruch 1, dadurch gekennzeichnet, daß die Steuereinrichtung (110, 62) so betätigbar ist, daß sie in der Produktionsbetriebsart bewirkt, daß die Bilderzeugungsmittel (69) Bilder von Vorlagen, die auf die Rückseite eines Kopieblattes (76) kopiert werden, in einer ersten Folge, und Bilder von Vorlagen, die auf die Vorderseite kopiert werden, in einer zweiten Folge erzeugen.

4. Vorrichtung nach einem der Ansprüche 1 bis 3, dadurch gekennzeichnet, daß die Zuführmittel eine erste Zuführeinrichtung (78, 80) für Kopieblätter (76) und eine zweite Zuführeinrichtung (82, 84) für Kopieblätter (76) aufweisen und daß die Steuereinrichtung (110, 62) während der Produktionsbetriebsart bewirkt, daß die erste Zuführeinrichtung (78, 80) ein Kopieblatt (76) liefert, auf dessen Vorderseite von den Bilderzeugungsmitteln (69) ein Bild kopiert wird, das dem einer als erste Seite einer Untergruppe gekennzeichneten Vorlage (34) entspricht, und daß die zweite Zuführeinrichtung (82, 84) ein Kopieblatt liefert, auf dessen Vorderseite von den Bilderzeugungsmitteln (69) ein Bild kopiert wird, das dem einer nicht gekennzeichneten Vorlage (34) entspricht.

5. Vorrichtung nach Anspruch 4, dadurch gekennzeichnet, daß die erste Zuführeinrichtung (78, 80) bzw. die zweite Zuführeinrichtung (82, 84) Kopieblätter mit einer ersten bzw. einer zweiten Charakteristik enthält, derart, daß das erste Kopieblatt einer Untergruppe die erste Charakteristik und die übrigen Kopieblätter der Untergruppe die zweite Charakteristik aufweisen.

6. Verfahren zur Herstellung aufeinanderfolgender Untergruppen von Kopien von einem Satz einseitiger Vorlagen in einer Vorrichtung mit einer Steuereinheit, in die Untergruppen kennzeichnende Daten eingebbar sind, und mit Mitteln zur wahlweisen Herstellung von einseitigen und doppelseitigen Kopien, gekennzeichnet durch folgende Arbeitsschritte:

von der Bedienungsperson werden mittels der Steuereinrichtung bestimmte Vorlagen als erste Seiten der Untergruppe gekennzeichnet;

die Kopien in einer Untergruppe werden gezählt;

alle Kopien außer der letzten Kopie einer jeden Untergruppe werden als doppelseitige Kopien hergestellt, und die letzte Kopie in einer Untergruppe wird als einseitige Kopie hergestellt, wenn die Zahl der Kopien in einer Untergruppe ungerade ist, und als Rückseite einer doppelseitigen Kopie, wenn die Zahl der Kopien in der Untergruppe gerade ist.

**Revendications**

1. Appareil de reproduction pour réaliser un ensemble de copies double face divisé en sous groupes à partir d'un ensemble d'originaux simple-face, la première page de chaque sous-groupe étant au recto d'une feuille de copie (76); ledit appareil comprend: a) des moyens d'alimentation (30) incluant un réceptacle destiné à recevoir un ensemble d'originaux simple-face (34); ces moyens d'alimentation sont destinés à faire circuler séquentiellement et individuellement les originaux (34) du réceptacle vers la station d'exposition (28), et ensuite à les faire retourner dans ledit réceptacle, b) des moyens de production (69) afin de produire, dans ladite station d'exposition, les images des originaux, c) des moyens de distribution (78, 80, 82, 84) fournissant des feuilles de copie (76) pour récupérer les images obtenues par lesdits moyens de production, d) des moyens de contrôle (110) destinés à l'opérateur afin de pouvoir sélectionner un mode de fonctionnent pour ledit appareil, caractérisé en ce que:

les moyens de contrôle (110, 62) sont prévus pour:

1) contrôler ledit appareil en mode initialisation, mode au cours duquel les moyens de contrôle (110) destinés à l'opérateur peuvent être mis en oeuvre pour désigner les originaux individuels simple-face à copier qui définiront les premières pages des sous-groupes, et

2) contrôler en mode production: (a) lesdits moyens d'alimentation (30) pour entraîner lesdits originaux simple-face (34) vers la station d'exposition (28); (b) lesdits moyens de production (69) afin de réaliser séquentiellement des images à partir desdits originaux (34); et (c) lesdits moyens de distribution (78, 80, 82, 84) lesquels fournissent aux moyens de production (69) des feuilles de copie (76) destinées à recevoir sur les deux faces (recto et verso) les images des originaux simple-face (34); les premières pages définies pour chaque sous-groupe étant au recto d'une feuille de copie (76).

2. Appareil selon la revendication 1, caractérisé en ce que lesdits moyens de contrôle (110, 62) peuvent fonctionner d'une part en mode initialisation au cours duquel les originaux sont entraînés un à un, sous le contrôle de l'opérateur afin de compter le nombre d'originaux simple-face (34) à copier pour chaque sous-groupe, pour déterminer si ce nombre est pair ou impair, et d'autre part en mode production pour traiter le verso de la dernière feuille de copie d'un sous-groupe comme une feuille blanche si le nombre d'originaux simple-face à copier est impair.

3. Appareil selon la revendication 1, caractérisé en ce que lesdits moyens de contrôle (110, 62) peuvent être utilisés en mode production pour commander lesdits moyens de production (69) de telle sorte que les images des originaux que l'on reproduit au verso d'une feuille de copie (76) soient réalisées au cours d'une première séquence et les images des originaux que l'on reproduit au recto soient réalisées au cours d'une seconde séquence.

4. Appareil selon l'une quelconque des revendications 1 à 3, caractérisé en ce que lesdits moyens de distribution incluent un premier distributeur (78, 80) de feuilles de copie (76) et un second distributeur (82, 84) de feuilles de copie (76) et dans lequel lesdits moyens de contrôle (110, 62) provoquent, en mode production, la fourniture d'une feuille par le premier distributeur (78, 80) laquelle feuille reçoit des moyens de production (69), au recto, une image correspondant à un original (34) qui a été désigné comme première page d'un sous-groupe et provoquent la fourniture d'une feuille par le second distributeur (82, 84) laquelle feuille reçoit, des moyens de production (69), au recto, l'image correspondant à un original (34) qui n'a pas été désigné comme première page d'un sous-groupe.

5. Appareil selon la revendication 4 caractérisé en ce que le premier distributeur (78, 80) et le second distributeur (82, 84) ont respectivement des feuilles de copie d'un premier et d'un second type de telle sorte que la première feuille de copie d'un sous-groupe soit du premier type et les autres feuilles de copie soient du second type.

6. Procédé pour réaliser des sous-groupes successifs de copies à partir d'un ensemble d'originaux simple-face, ledit procédé étant mis en oeuvre dans un appareil ayant des moyens de contrôle pour recevoir des données désignant les sous-groupes et des moyens pour sélectivement produire des copies simple-face ou double-face, et étant caractérisé en ce qu'il comprend les étapes suivantes:

a) l'indication aux moyens de contrôle et par l'opérateur des originaux correspondant aux premières pages des sous-groupes

b) le comptage du nombre de copies dans un sous-groupe

c) la réalisation de toutes les copies en double-face sauf la dernière copie de chaque sous-groupe; et

d) la réalisation de la dernière copie d'un sous-groupe comme une copie simple-face lorsque le nombre de copies du sous-groupe est impair, et au verso d'une copie double-face lorsque le nombre de copies est pair.

MOTOR

ENCODER

LOGIC & CONT. UNIT (LCU) (SEE FIG.2)

OPERATOR CONT. PANEL (SEE FIG.2)

FIG. I

FIG. 2

**0 147 817**

CHAPTERIZATION
SET-UP MODE

SIMPLEX-DUPLEX
MODE SELECTED
BY OPERATOR

SELECT COVERS
MODE IF NEEDED

PLACE SIMPLEX
ORIGINALS INTO
FEEDER

SPECIAL MODE
555* SELECTED

OPERATOR ENTERS
NUMBER OF
COPIES REQUESTED

**FIG. 3**

A

START
BUTTON
PUSHED
?  — NO

YES

FEED ONE
SHEET AROUND
FEEDER

IS
THE SHEET
ON TOP OF ORIG.
STACK FIRST PAGE
OF A
CHAPTER
? — NO

YES

PUSH* BUTTON

CALCULATE NUMBER
OF PAGES IN THIS
CHPT. FOR BLANK
PAGE
PROCESSING

STOP
SET UP
TEMPORARILY
? — YES

NO

PUSH STOP
RESET
BUTTON

EXIT
MODE — YES

NO

TURN OFF
FEEDER

ORIG.
BACK IN
INITIAL STARTING
ORDER
? — NO — A

YES

SET-UP COMPLETE

RETURN

PUSH
CANCEL

EXIT MODE
TURN OFF FEEDER

3

```
        ┌─────────────────┐
        │  CHAPTERIZATION  │
        │ PRODUCING MODE   │
        │     SIDE I       │
        └────────┬────────┘
                 │
        ┌────────┴────────┐
        │ OPERATOR PERFORMS│
        │ SET-UP PROCEDURE │
        │   (SEE FIG.3)    │
        └────────┬────────┘
```

**FIG. 4**

'START' BUTTON PUSHED ? — YES

NO

AUTO-START ALLOWED AFTER SET-UP ? — NO

YES

START COPIER

ORIGINAL JUST FED BACK OF FIRST PAGE OF THIS CHAPTER ? — NO → FEED COPY SHEET FROM LOWER SUPPLY

YES

FEED COPY SHEET FROM UPPER SUPPLY

ODD NUMBER OF ORIGINALS IN THIS CHAPTER ? — NO

YES

ORIGINAL JUST FED LAST PAGE OF THIS CHAPTER ? — NO

YES

PROCESS THIS COPY AS A BLANK PAGE

CHANGE SIDES

SIDE I COMPLETED — NO / YES

4

FIG. 5